# EUROPÄISCHE PATENTSCHRIFT

(11) **EP 2 464 793 B1**
(45) Veröffentlichungstag und Bekanntmachung des Hinweises auf die Patenterteilung: **25.06.2014**
(21) Anmeldenummer: 10765734.8
(22) Anmeldetag: 11.08.2010
(51) Int. Cl.: E03B 3/28, B01D 53/14

(54) **VORRICHTUNG ZUR GEWINNUNG VON WASSER AUS ATMOSPHÄRISCHER LUFT**
DEVICE FOR EXTRACTING WATER FROM ATMOSPHERIC AIR
DISPOSITIF D'EXTRACTION D'EAU A PARTIR DE L'AIR ATMOSPHERIQUE

(30) Priorität: 11.08.2009 DE 102009036933
(43) Veröffentlichungstag der Anmeldung: 20.06.2012
(73) Patentinhaber: Logos-Innovationen GmbH, 88285 Bodnegg (DE)
(72) Erfinder: THIELOW, Frank, W., 88285 Bodnegg (DE); THIELOW, Christian, 88131 Lindau (DE)
(74) Vertreter: Roth, Klaus
(86) Internationale Anmeldenummer: PCT/DE2010/000952
(87) Internationale Veröffentlichungsnummer: WO 2011/018079

(56) Entgegenhaltungen:
- WO-A1-03/104571
- WO-A1-2004/106649
- DE-A1- 2 305 652
- DE-A1- 10 309 110

## Beschreibung

Die Erfindung betrifft eine Vorrichtung zur Gewinnung von Wasser aus atmosphärischer Luft nach dem Oberbegriff des Anspruchs 1.

An vielen Orten der Erde, besonders in halbariden oder ariden Gebieten wie z.B. in Teilen Israels, Ägyptens, der Sahelzone oder zahlreichen Heißwüsten, die in einer deutlichen Entfernung zum Meer liegen, sind zumindest ganzjährig keine Trinkwasservorräte vorhanden. Neben dem Transport von Trinkwasser besteht hier lediglich die Möglichkeit, dieses aus feuchter Luft bereitzustellen.

In vielfacher Weise sind bereits Kondensatoren zur Gewinnung von kondensierbarem Wasser aus atmosphärischer Luft mit einem kühlbaren Kältespeicher bekannt, wobei die relativ feuchte atmosphärische Luft unter den Taupunkt abgekühlt wird (vgl. DE-PS-28 10 241, DD 285 142 A5).

Darüber hinaus sind auch Vorrichtungen bekannt, die mittels eines adsorptiven bzw. absorptiven Materials wie einem Salz, z.B. Natriumchlorid, oder dergleichen atmosphärisches Wasser in einer Absorptionsphase binden. Hierbei wird das Salz bzw. die entsprechende Solelösung im Allgemeinen in einem Flüssigkeitsbehälter aufbewahrt, wobei der Wasserspiegel bzw. die in vertikaler Richtung betrachtet obere Seite des Salzes bzw. der Sole als Wasser adsorbierende bzw. absorbierende Oberfläche anzusehen ist. In einer Desorptionsphase wird diese Salz-Wasser-Lösung bzw. Sole zur Gewinnung des Trinkwassers entfeuchtet und das Salz wieder für die Absorption zur Verfügung gestellt (vgl. z.B. DE-PS 2 660 068,

DE 198 50 557 A1). Nachteilig bei diesen Verfahren bzw. Vorrichtungen ist jedoch das vergleichsweise große Bauvolumen bzw. die relativ geringe Ausbeute an Trinkwasser pro Volumeneinheit der Sole.

Zudem sind bereits aus den Druckschriften DE 103 09 110 A1 oder DE 10 2004 026 334 A1 Vorrichtungen mit Solelösungen bekannt, die eine vergleichsweise große Ausbeute pro Volumeneinheit aufweisen.

Es hat sich jedoch zwischenzeitlich gezeigt, dass der Energieeinsatz pro gewonnenem Liter Wasser bzw. Trinkwasser noch deutlich zu groß ist, um eine wirtschaftliche Gewinnung von Wasser aus atmosphärischer Luft zu erreichen.

Aufgabe der Erfindung ist es demzufolge, eine Vorrichtung zur Gewinnung von Wasser aus atmosphärischer Luft mit einem fließfähigen Sorbens, insbesondere einer Solelösung mit einem hygroskopischen Salz zur Sorption des Wassers, vorzuschlagen, die eine bessere Energieausbeute erreicht, um insbesondere eine wirtschaftliche Betriebsweise zu gewährleisten.

Diese Aufgabe wird, ausgehend von einer Vorrichtung der einleitend genannten Art, durch die kennzeichnenden Merkmale der Anspruches 1 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße Vorrichtung dadurch aus, dass ein Fließbett am Verteilerelement als eine Lenkvorrichtung zum Lenken des fließfähigen Sorbens ausgebildet ist, so dass sich in horizontaler Richtung betrachtet im Wesentlichen der Sorptionsweg um eine Achse des Verteilerelements von wenigstens dem halben Kreisbogen, vorzugsweise wenigstens einmal des ganzen Kreisbogens erstreckt. Vorteilhafterweise weist das Verteilerelement wenigstens ein Fließbett des Sorptionsweges auf, das sich wenigstens um eine Achse des Führungselementes von wenigstens 180° erstreckt.

Überraschenderweise hat sich in ersten Versuchen gezeigt, dass mit dieser vorteilhaften Maßnahme ein besonders geringer Energieeinsatz notwendig ist.

Gemäß der Erfindung wird erreicht, dass im Vergleich zum Stand der Technik bei gleicher Bauhöhe der Vorrichtung bzw. des Sorptionsraumes der Sorptionsweg deutlich verlängert wird, was zu einer entsprechenden Verlängerung der Sorptionsphase und somit zu einer Optimierung der Sorption bzw. zu einer Sättigung des Sorbens bereits bei geringen Bauhöhen führt. Entsprechend niedrige Vorrichtungen gemäß der Erfindung sind besonders kostengünstig herstellbar und/oder betreibbar und somit wirtschaftlich realisierbar.

So stellt die vorliegenden Erfindung eine Abkehr von der Vorgängererfindung gemäß der DE 10 2004 026 334 dar. Bei dieser Vorentwicklung ging die Anmelderin davon aus, dass eine vertikale Fließrichtung des fließfähigen Sorbens bzw. der Solelösung entlang der "Perlenketten" bzw. des Führungselementes mit den Verteilerelementen zu einer guten Sorption bei gleichzeitiger Energieeinsparung aufgrund der Schwerkraft-Nutzung führt. Demzufolge offenbart die DE 10 2004 026 334 Führungsstäbe oder "Perlenketten" bzw. Verteilerelemente, wobei letztere im Wesentlichen rund oder in vertikaler Richtung gestreckt sind, um das Herunterfließen entlang der Führungsstäbe oder der "Perlenketten" zu beeinflussen.

Gemäß der vorliegenden Erfindung sind die Verteilerelemente dagegen jedoch "breiter" als sie "hoch" sind. Hierdurch wird nicht wie beim Stand der Technik die Fließgeschwindigkeit des Sorbens maximiert bzw. hoch, sondern die Durchströmung der Luft quer zum Führungselement, insbesondere quer zu zahlreichen, nebeneinander angeordneter Führungselementen, mit den vorteilhaft ausgebildeten Verteilerelementen bzw. "Perlen", die gemäß der Erfindung breiter als höher sind, wird verbessert bzw. optimiert. Vorzugsweise ist die Breite des Verteilerelementes wenigstens um den Faktor drei, insbesondere etwa um den Faktor fünf oder sechs bis zehn größer als die Höhe des Verteilerelementes.

Grundsätzlich kann/können gemäß der Erfindung ein besonders aerodynamisch vorteilhaft ausgebildetes Verteilerelement bzw. Verteilerelemente realisiert werden. Beispielsweise ist ein aerodynamisch günstiger Querschnitt vorgesehen, insbesondere ein etwa tropfenförmiger, linsenförmiger oder tragflächenförmiger Querschnitt der Verteilerelemente. Hierdurch können gegebenenfalls zusätzliche aerodynamisch vorteilhafte Effekte verwirklicht werden.

Vorteilhafterweise ist eine in im Wesentlichen horizontal ausgerichtete Außenkontur des Verteilerelementes vorgesehen, so dass zahlreiche Verteilerelemente eine im Wesentlichen flächendeckende Anordnung ausbilden. Diese Maßnahme verbessert zusätzlich die Durchströmung der Luft. Die in horizontaler Richtung nebeneinander angeordneten Verteilerelemente bilden nahezu durchgehende Flächen, d.h. Strömungsflächen bzw. quasi Etagen oder dergleichen entlang denen die atmosphärische Luft aerodynamisch günstig strömen kann.

In einer vorteilhaften Variante der Erfindung ist eine vertikal ausgerichtete Höhe des Verteilerelementes an einem Randbereich des Verteilerelementes kleiner als im Bereich des Führungselementes und/oder im Bereich der Mitte des Verteilerelementes. Auch diese Maßnahme verbessert die Aerodynamik der erfindungsgemäßen Vorrichtung.

Gemäß der Erfindung wird in vorteilhafter Weise, selbst bei Verwendung zahlreicher Führungselemente, die vorzugsweise nebeneinander angeordnet sind, und/oder zahlreicher Verteilerelemente, die vorzugsweise übereinander angeordnet sind, eine aerodynamisch vorteilhafte Durchströmung der erfindungsgemäßen Vorrichtung gewährleistet. Hierbei werden im Gegensatz zum o.g. Stand der Technik wenig oder keine Todräume der durchströmenden Luft hinter den Führungselementen bzw. Verteilerelementen erzeugt. Beim Stand der Technik führten die ausgeprägten Todräume mit nahezu nicht strömender Luft, dazu, dass die Sorption am entsprechenden Verteilerelement sich verschlechterte bzw. zum Stillstand kam. Selbst der Einsatz eines Gebläses zur Verbesserung der Durchströmung konnte nur bedingt die Sorption aufrechterhalten. Gemäß der vorliegenden Erfindung ist ein derartiges Gebläse nicht notwendig, so dass eine erhebliche Energieeinsparung durch den Verzicht einer künstlichen Erzeugung einer Luftströmung durch die erfindungsgemäße Vorrichtung realisiert wird.

Vorteilerweise weist ein Fließbett des Sorptionsweges auf der Oberseite des Verteilerelementes einen Verlauf auf, der unterschiedlich zum Verlauf eines Fließbettes des Sorptionsweges auf der Unterseite des Verteilerelementes ist. Hiermit kann eine Anpassung des Verteilerelementes derart erfolgen, dass das fließfähige Sorbens bzw. eine Solelösung entlang einer Oberseite eines Körpers ein unterschiedliches Fließverhalten zeigt, als entlang einer Unterseite eines Körpers, d.h. "kopfüber". Dementsprechend ist der Verlauf des Sorptionsweges bzw. Fließbetts auf der Oberseite optimierbar und in unterschiedlicher Weise ist der Verlauf des Sorptionsweges bzw. Fließbetts entlang der Unterseite separat bzw. unabhängig hierzu optimierbar.

Vorteilhafterweise weist zumindest das Fließbett des Sorptionsweges auf der Oberseite des Verteilerelementes einen Weg verlängernden Verlauf auf. Hierdurch wird die Sorptionsdauer und/oder die Sorptionsfläche vergrößert bzw. verlängert, was für die Sorption von großem Vorteil ist.

Hierbei wird auch ein kombinatorischer Effekt mit der erfindungsgemäßen Ausbildung des Verteilerelementes realisiert. Das vergleichsweise breite Verteilerelement ermöglicht in besonders vorteilhafter Weise eine Verwirklichung des Weg verlängernden Verlaufs bzw. des verlängerten Sorptionsweges/Fließbettes auf der Oberseite, d.h. der in vertikaler Richtung nach oben gerichteten Seite.

Vorzugsweise weist das Fließbett des Sorptionsweges auf der Unterseite des Verteilerelementes einen im Wesentlichen in radialer Richtung ausgerichteten Verlauf auf. Hiermit wird wirkungsvoll unter anderem ein Abreißen bzw. ein Abdriften des Sorbens bzw. der Solelösung vom Verteilerelement verhindert.

In einer vorteilhaften Variante der Erfindung ist wenigstens die Länge des Sorptionsweges und/oder Fließbettes auf der Oberseite des Verteilerelementes wenigstens um den Faktor zehn größer als die vertikal ausgerichtete Sorptionshöhe des Sorptionsweges auf der Oberseite des Verteilerelementes. Es haben erste Versuche gezeigt, dass derart geringe Steigungen des Fließbettes bzw. des Sorptionsweges im Vergleich zur weitgehend vertikalen Fließrichtung gemäß dem Stand der Technik eine Verbesserung des Sorptionsvorganges bewirkt.

Vorzugsweise ist wenigstens die Länge des Sorptionsweges und/oder Fließbettes auf der Oberseite des Verteilerelementes wenigstens etwa um den Faktor zwanzig, fünfzig, insbesondere hundert, größer als die vertikal ausgerichtete Sorptionshöhe des Sorptionsweges auf der Oberseite des Verteilerelementes. Beispielweise ist das Fließbett auf der Oberseite des Verteilerelementes etwa zwischen 0,5 bis 1 cm hoch und die Länge des Fließbettes etwa 40 bis 100 cm, insbesondere ca. 50 cm lang.

In einer vorteilhaften Ausführungsform der Erfindung ist das Fließbett bzw. die Lenkvorrichtung als flaches Fließbett des Verteilerelementes mit einem im Wesentlichen vertikal ausgerichteten Rand ausgebildet. Der Rand gewährleistet eine vorteilhafte Führung bzw. Lenkung des Sorbens sowohl auf der Oberseite als auch auf der Unterseite des Verteilerelementes.

Vorteilhafterweise umfasst das Führungselement wenigstens zahlreiche Verteilerelemente zum Vergrößern der Sorptionsfläche. Auch diese Maßnahme verbessert die Sorption, was zu einer wirtschaftlich günstigen Betriebsweise führt.

In einer besonderen Weiterbildung der Erfindung weist das Verteilerelement wenigstens die Lenkvorrichtung auf, so dass sich in horizontaler Richtung betrachtet im Wesentlichen der Sorptionsweg um eine Achse des Verteilerelementes von wenigstens dem halben Kreisbogen, vorzugsweise wenigstens einmal des Kreisbogens erstreckt.

Generell wird im Sinn der Erfindung die Erstreckung über den halben oder ganzen Kreisbogen eine Ausdehnung des Fließbettes bzw. der Lenkvorrichtung verstanden, die sich im Wesentlichen über einen Winkel etwa von wenigstens 180° bzw. 360° erstreckt. Dies kann lediglich einfach bzw. einmal erfolgen oder auch mehrfach. Letzteres bedeutet, dass die Lenkvorrichtung z.B. auch zick-zack-förmig und/oder serpentinenartig bzw. geschlängelt ausgebildet ist, vorzugsweise um die Achse des Führungs- bzw. Verteilerelementes herum.

Vorteilhafterweise ist das Fließbett bzw. die Lenkvorrichtung am Verteilerelement derart ausgebildet, so dass sich in horizontaler Richtung betrachtet der Sorptionsweg um die Achse des Führungselementes und/oder Verteilerelementes um ein Vielfaches des Kreisbogens und/oder ein Vielfaches von 360° erstreckt. Insbesondere weist das Fließbett bzw. die Lenkvorrichtung im Wesentlichen die Form einer Schneckenlinie auf. Hiermit kann ein Sorptionsweg des Sorbens realisiert werden, der sich beispielsweise zweimal oder dreimal oder noch öfters um die Achse des Führungselementes und/oder Verteilerelementes herum erstreckt.

Dementsprechend deutlich wird der Sorptionsweg am Verteilerelement gegenüber dem mehr oder weniger einfachen geraden herunter fließen gemäß dem Stand der Technik verlängert. Bei im Vergleich zum Stand der Technik gleichen Bauhöhen der Vorrichtung bzw. Längen des Führungselementes und/oder Verteilerelementes wird hiermit eine enorme Verlängerung des Weges des Sorbens und somit eine wesentliche Verlängerung der Sorptionsphase bzw. -zeitdauer erreicht. Hiermit kann das sorbens bzw. die Solelösung weitestgehend mit Wasser aus der Atmosphäre gesättigt werden, insbesondere bei realistischen Bauhöhen bzw. Ausmaßen der Vorrichtung gemäß der Erfindung.

Vorzugsweise ist das Fließbett bzw. die Lenkvorrichtung im Wesentlichen als Vertiefung und/oder Nut und/oder Kanal des Verteilerelementes ausgebildet. Dies ermöglicht eine vorteilhafte Lenkung bzw. Leitung des vorzugsweise flüssigen Sorbens am Führungselement und/oder Verteilerelement. Gegebenenfalls wird die Vertiefung oder dergleichen bereits beim Herstellungsprozess des Führungselementes und/oder Verteilerelementes erzeugt und7oder nachträglich durch abrasive oder spanende Verfahren.

In einer vorteilhaften Variante der Erfindung ist das Führungselement im Wesentlichen in vertikaler Richtung ausgerichtet, an dem vorzugsweise das/die zahlreichen Verteilerelemente angeordnet sind. Dies ist vorteilhaft herstellbar und vor allem kann hierbei die Schwerkraft wirkungsvoll eingesetzt bzw. als Antrieb des fließfähigen Sorbens bzw. Soleflüssigkeit verwendet werden. Dies spart Energie und führt zu einer wirtschaftlichen Betriebsweise.

Generell kann mit der vorliegenden Erfindung auf ein mehrfaches Umpumpen, d.h. wiederholtes bzw. mehrfaches Hochpumpen, des Sorbens bzw. der Soleflüssigkeit verzichtet werden. Dies wird u.a. durch die große Verweildauer des Sorbens am Führungselement bzw. auf den Verteilerelementen erreicht. Demzufolge wird in erheblichem Maß Energie für das Umpumpen des Sorbens eingespart.

Vorteilhafterweise weist das Führungselement und/oder das Verteilerelement wenigstens eine im Wesentlichen aus Glas bestehende Kontaktfläche für das fließfähige Sorbens auf bzw. besteht im Wesentlichen aus Glas. Glas ist lebensmittelecht, was für eine mögliche Verwendung des gewonnenen Wassers als Trinkwasser von Vorteil ist. Zudem lässt sich Glas gut reinigen bzw. ist verschmutzt relativ wenig, da die Haftung auf glattem Glas gering ist. Auch dies ist bei Trinkwasseranwendungen von besonderem Vorteil.

Vorzugsweise ist wenigstens die Kontaktfläche des Glases als aufgeraute Oberfläche ausgebildet. Hierdurch wird die Haftung bzw. die Lenkung des Sorbens bzw. der Solelösung am Führungselement und/oder das Verteilerelement deutlich verbessert. Das Glas bekommt hiermit hydrophile Eigenschaften. Dies optimiert den Sorptionsprozess und zudem wird die Abtrift des Sorbens bei Wind bzw. Sturm verringert bzw. verhindert.

In einer besonderen Weiterbildung der Erfindung ist wenigstens die Kontaktfläche des Glases als mit einem Strahlmittel, insbesondere mit Feststoffpartikeln wie Sand, Glasperlen oder dergleichen, gestrahlte Oberfläche ausgebildet. Es hat sich in ersten Versuchen gezeigt, dass dies zu einer besonderen Lenkung bzw. Leitung des Sorbens insbesondere in einem entsprechenden Kanal oder dergleichen führt. Hiermit wird eine definierte Führung des Sorbens längs des ganzen Führungselementes und/oder das Verteilerelementes erreicht. Dies ist für einen stabilen Sorptionsvorgang von entscheidender Bedeutung, um keine ungewollten bzw. nicht definierten Sorptionswege im Sorptionsraum zu erhalten.

Vor allem alternativ zum Strahlen kann wenigstens die Kontaktfläche des Glases als geätzte Oberfläche oder als geschliffene Oberfläche ausgebildet werden.

Vorteilhaft weist das Führungselement wenigstens eine zumindest eine Kapillare umfassende Kapillareinheit zum Zudosieren des fließfähigen Sorbens zum Sorptionsweg auf. Die Kapillare kann ein separates Verschlusselement bzw. einen Verschlussmechanismus oder dergleichen ersetzen, was somit zu einer erheblichen wirtschaftlichen Einsparung führt.

Vorzugsweise wenigstens eine Dosiereinheit mit mindestens einer Dosieröffnung zum Zudosieren des Sorbens zum Führungselement vorgesehen ist. Dies ermöglicht eine definierte Zugabe an Sorbens, was sich bezügliche der Sorption vorteilhaft auswirkt.

Vorzugsweise umfasst die Kapillare wenigstens die Dosieröffnung der Dosiereinheit.

Vorteilhafterweise ist wenigstens einer Druckerzeugungseinheit zum Druckbeaufschlagen des in einem Sorbensspeicher angeordneten fließfähigen Sorbens vorgesehen. Die Zugabe bzw. Zudosierung des Sorbens kann hiermit mittels Druckänderung kontrolliert bzw. gesteuert werden. Die Kapillare hält das Sorbens beispielsweise im Druck losen zustand des Sorbens in einem Sorbensspeicher bzw. einem Flüssigkeitstank oder dergleichen. Eine Druckbeaufschlagung bzw. Druckvergrößerung druckt bzw. dosiert das Sorbens dem/den Führungselementen und/oder Verteilerelementen zu.

Die Druckänderung kann impulsartig und/oder allmählich bzw. kontinuierlich zu bzw. abnehmen. Entsprechend wird der Sorptionsprozess bzw. die Menge des Sorbens in der Sorptionsphase gesteuert, z.B. in Abhängigkeit der Luftfeuchtigkeit, Luftgeschwindigkeit, Temperatur, etc.

In einer vorteilhaften Variante der Erfindung ist die in Strömungsrichtung des Sorbens betrachtete Länge der Kapillare um ein Vielfaches größer als ein Durchmesser des lichten Querschnitts der Kapillare. Die Kapillarwirkung bzw. -kraft wird mit zunehmender Länge der Kapillare verbessert bzw. vergrößert. Dementsprechend kann eine besonders lange Kapillare die Dosieröffnung besser bzw. sicherer verschließen, je länger diese zum Querschnitt bzw. Durchmesser der Kapillare ist. Beispielsweise sind Durchmesser von ca. 1 bis 10 mm, insbesondere 2 bis 4 mm, von Vorteil. Längen der Kapillare können im Bereich von Zentimeter liegen.

Generell ist Sorptionsphase von einer halben oder ganzen Stunde von Vorteil. D.h. ein Sorbens bzw. ein Soletropfen benötigt diese Zeit, um längs des Führungselementes bzw. des gewundenen Sorptionsweges zu fließen.

Ein Ausführungsbeispiel der Erfindung ist in der Zeichnung dargestellt und wird anhand der Figuren nachfolgend näher erläutert.

Im Einzelnen zeigt:
- Figur 1: eine schematische Darstellung einer Vorrichtung gemäß der Erfindung mit perlschnurartigen Führungselementen,
- Figur 2: eine schematische, perspektivische Ausschnitts-Darstellung der Führungselemente gemäß Figur 1,
- Figur 3: eine schematische, perspektivische Darstellung eines ersten Verteilerelementes gemäß Figur 2,
- Figur 4: eine schematische Schnittdarstellung eines vergrößerten Ausschnitts gemäß Figur 1,
- Figur 5: eine schematische Draufsicht auf mehrere Führungselemente bzw. erste Verteilerelemente,
- Figur 6: eine schematische Schnittdarstellung einer Kapillareinheit,

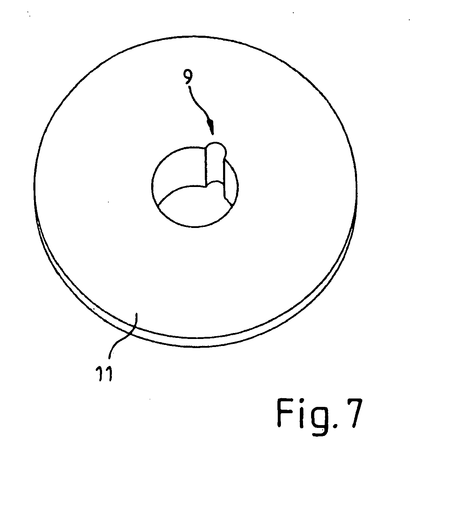

- Figur 7: eine schematische, perspektivische Kapillareinheit,
- Figur 8: eine schematische Darstellung eines zweiten Verteilerelementes gemäß der Erfindung in verschiedenen Ansichten,
- Figur 9: eine schematische Draufsicht und Seitenansicht des zweiten Verteilerelementes gemäß Figur 8,
- Figur 10: eine schematische, vertikale Schnittdarstellung durch eine Vorrichtung gemäß der Erfindung mit Mantelturbine, Windfahne und Sonnenblenden und
- Figur 11: eine schematische, horizontale Schnittdarstellung durch eine Vorrichtung gemäß der Erfindung mit einer Mantelturbine.

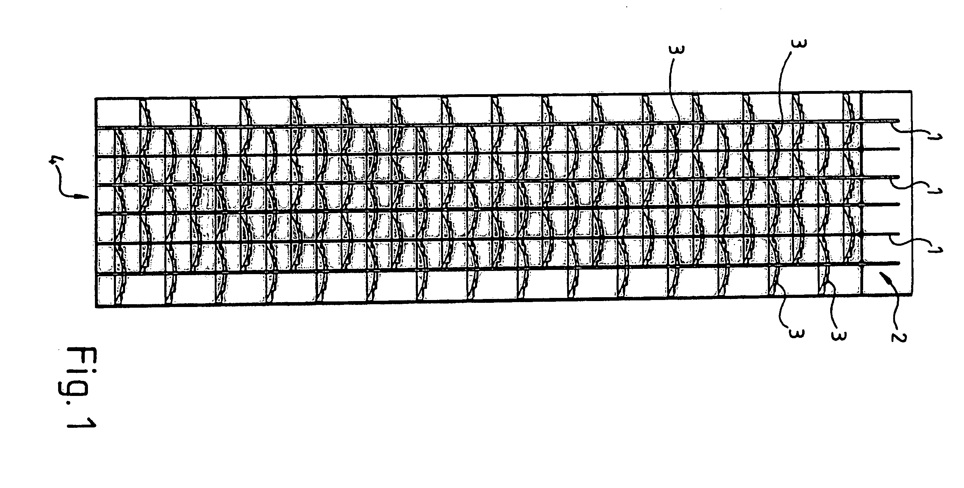

In Figur 1 ist schematisch eine Vorrichtung gemäß der Erfindung als Modul mit sechs dargestellten Führungselementen 1 mit zahlreichen, ersten Verteilern 3 und einem oben angeordneten Solespeicher 2 sowie einem Ablauf 4 aufgeführt.

Im Solespeicher ist eine Soleflüssigkeit gespeichert, die längs der Führungselemente 1 nach unten und schließlich mit Wasser aus der Atmosphäre angereichert bzw. verdünnt zum Ablauf 4 fließt.

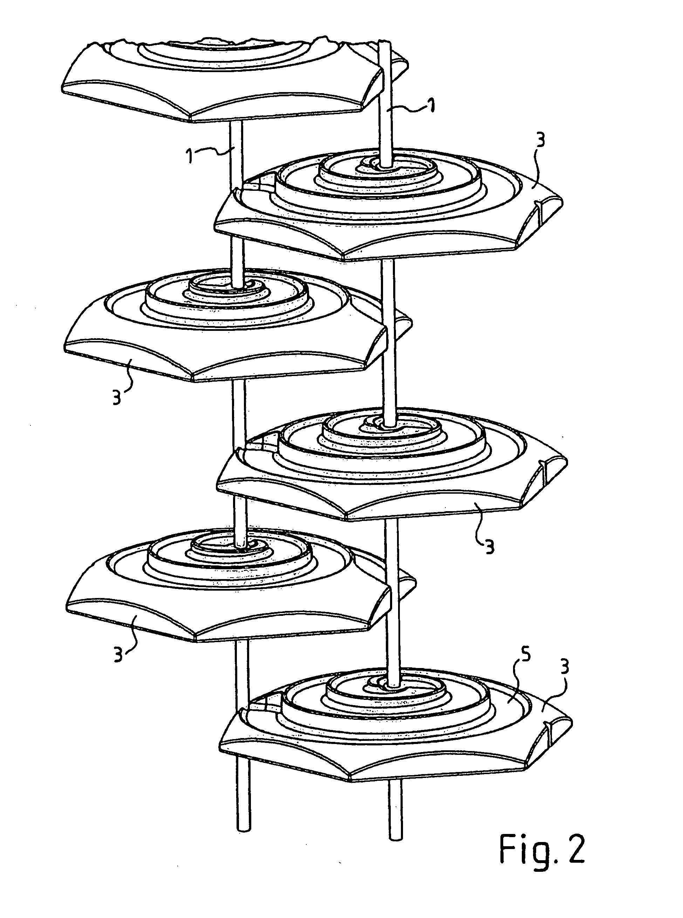

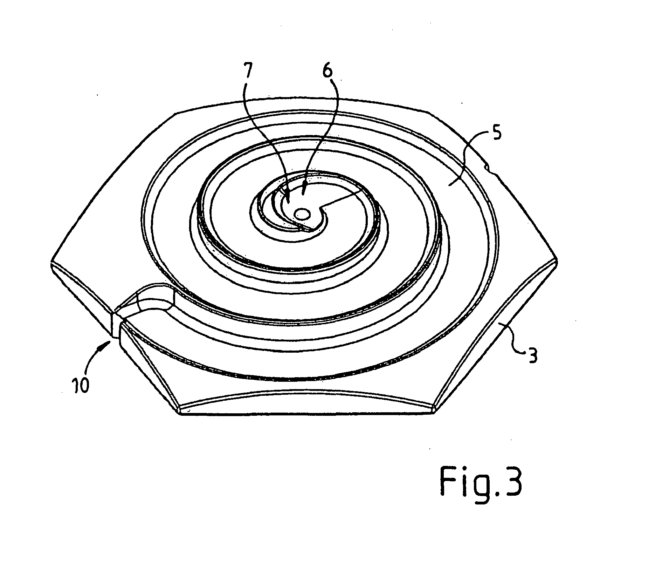

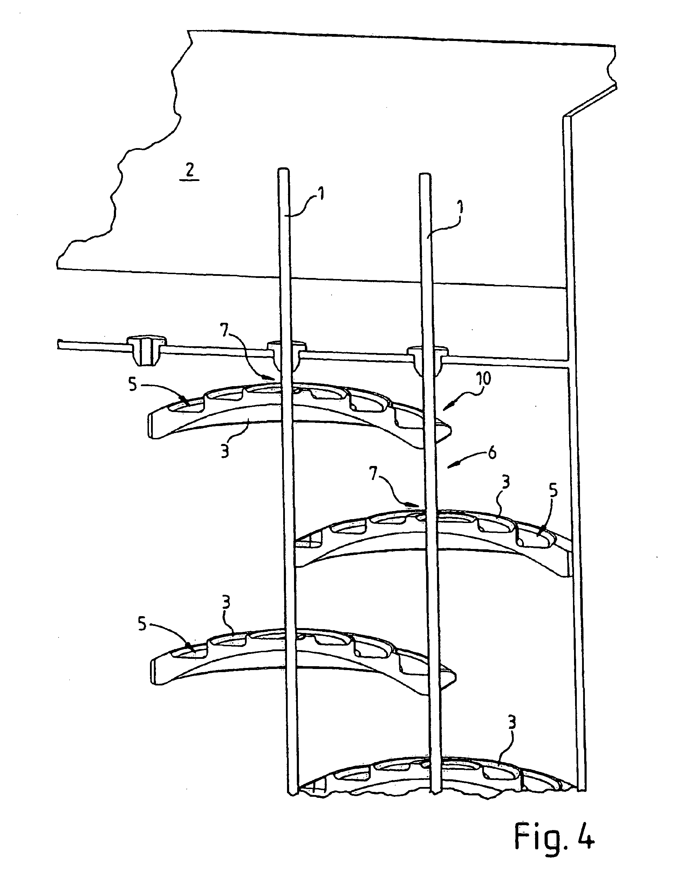

Längs der Führungselemente 1 sind zahlreiche Verteiler 3 angeordnet, über die das Sorbens fließt. D.h. der Sorptionsweg führt auch über die Verteiler 3. Die Vergrößerung gemäß Figur 2 bis 5 verdeutlicht die Anordnung und Ausbildung der Verteiler 3 am Führungselement 1. Hierbei wird deutlich, dass die Verteiler 3 einen Kanal 5 bzw. ein Fließbett 5 mit seitlich hoch stehenden Rändern 28 umfassen, der/das als Schneckenlinie ausgebildet ist und sich z.B. etwa dreimal um eine Achse 6 der Verteilers 3 bzw. des Führungselementes 1 herum winden. D.h. der Kanal 5 erstreckt sich im Sinn der Erfindung um den dreifachen Kreisbogen um die Achse 6.

Ein Zufluss 7 des Kanals 5 erfolgt am Führungselement 1 einerseits vom Solespeicher 2 bzw. einer Kapillare 9. Andererseits von einem benachbarten bzw. seitlich versetztem, oberhalb angeordnetem Verteiler 3 bzw. durch das Führungselement 1.

Ein Abfluss 10 des Verteilers 3 bzw. des Kanals 5 übergibt das Sorbens an einen nachfolgenden Verteiler 3 bzw. einem benachbartem Führungselement 1 oder dem Ablauf 4. Das Sorbens bzw. die Solelösung läuft im Kanal 5 mit sehr geringer Steigung von vorzugsweise ca. 1 bis 2° und ist z.B. nur ca. 0,3 bis 0, 4 mm dick. Hierdurch wird ein vergleichsweise gutes Verhältnis Volumen zur Sorptionsoberfläche bzw. eine gute Fließgeschwindigkeit erreicht.

Die Verteiler 3 können z.B. Durchmesser von ca. 5, 10, 30 oder 50 cm aufweisen, wobei bei letzteren Durchmessern der Kanal vorzugsweise deutlich mehr Kreisbogen überstreicht.

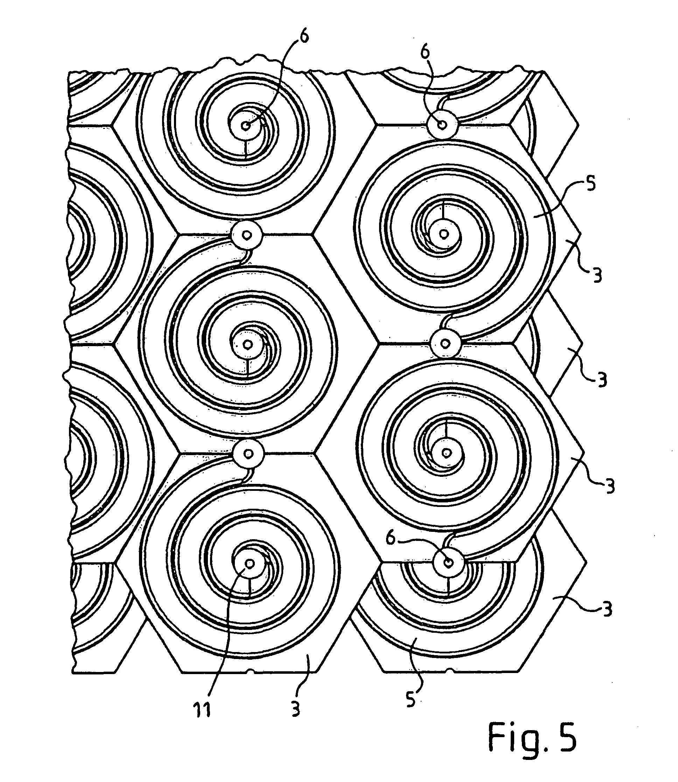

Weiterhin sind die Verteiler 3 vorzugsweise sechseckig ausgebildet, so dass diese in der Draufsicht gemäß Figur 5 eine geschlossene Fläche bzw. Schichtung realisieren. Dies verbessert die Aerodynamik des Systems bzgl. der durchströmenden Luft. Die Verteiler 3 können auch eine ebene Unterseite aufweisen.

Die Dosierung erfolgt vorzugsweise über die Kapillare 9, die eine Kapillareinheit 11 in Verbindung mit dem Führungselement 1 ausbildet. Hierdurch ist es möglich, auf einen mechanischen Verschluss zu verzichten, was Kosten und Steuerungstechnik spart. Die Dosierung erfolgt z.B. über eine Druckänderung des Sorbens im Speicher 2. Tropfendosierung ist hier von besonderem Vorteil.

Die Verteiler 3 sind vorzugsweise aus Glas gefertigt. Glas kann gegossen, gepresst oder dergleichen hergestellt werden. Zudem kann auf Recycling-Glas zurückgegriffen werden, was zusätzlich die Kosten senkt. Zudem ist Glas lebensmittelecht, sehr stabil und z.B. mittels Sandstrahlen oder dergleichen aufraubar. Vorteilhafterweise ist der Kanal 5 aufgeraut und der Rest der Verteiler 3 eher nicht, was sich strömungstechnisch günstig auswirkt.

Die Anordnung von zahlreichen Verteilern 3 übereinander und nebeneinander verbessert die Ausbeute pro Volumen bzw. Modul. Auch sind mehrere Module miteinander koppelbar. Die Ausmaße eines Moduls gemäß der Erfindung können z.B. ca. 2,5 m hoch und ca. 2,5 m im Durchmesser realisiert werden. Hierbei kann auf ein mehrfaches Umpumpen der Sole verzichtet werden, so dass erhebliche Energieeinsparungen gegenüber dem Stand der Technik realisiert werden. D.h. die Solelösung läuft vom Speicher 2 längs der Führungselemente 1 bzw. der Verteiler 3 herunter und wird unten in nicht näher dargestellter Weise einer Abtrennung, insbesondere einer Destillation und/oder mittels einer Zentrifuge oder dergleichen, des gewonnenen Wassers bzw. Trinkwassers von z.B. dem Salz unterzogen.

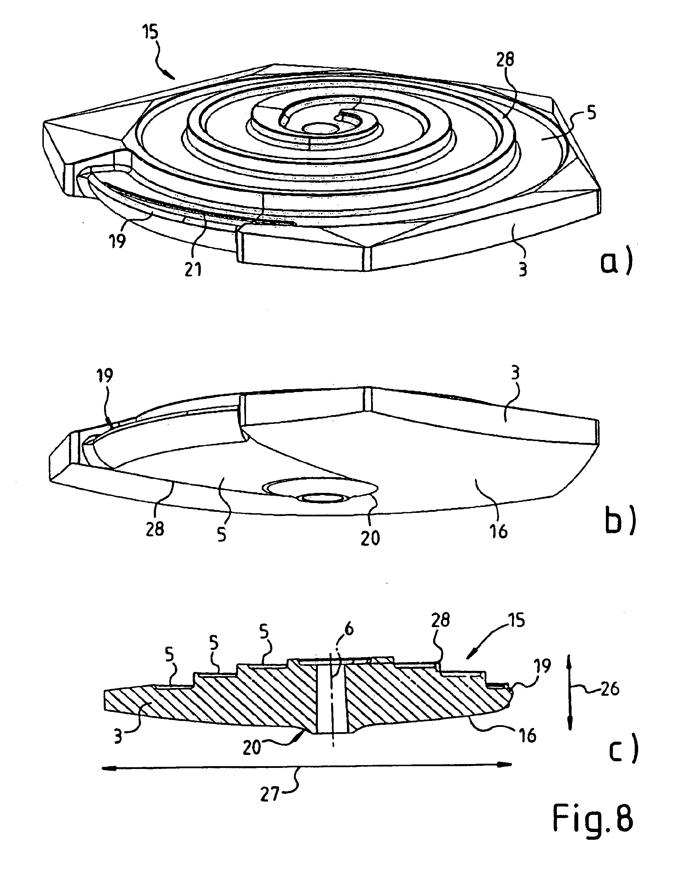

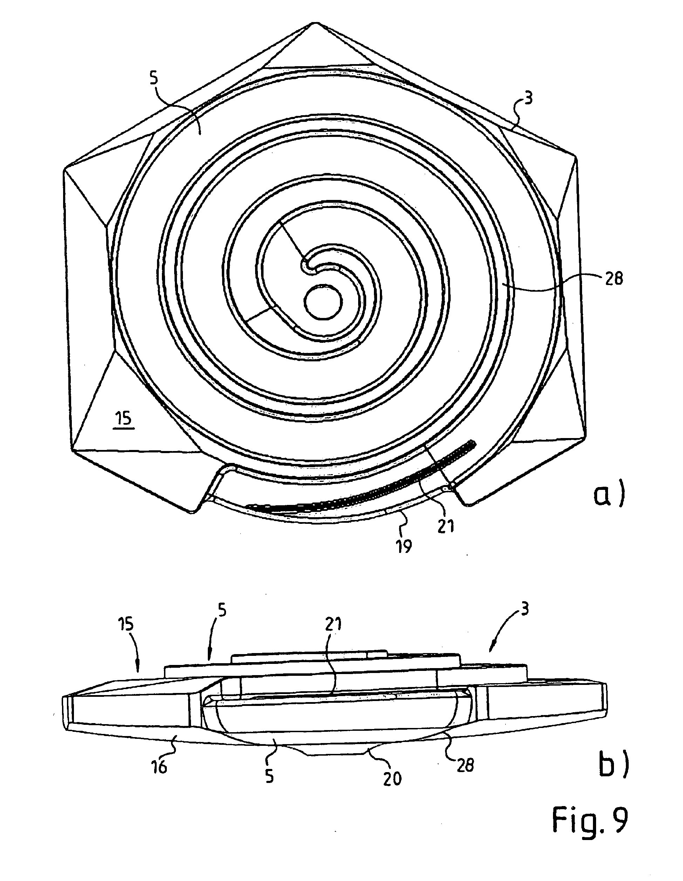

Entsprechend dem ersten, zuvor dargestellten Ausführungsbeispiel kann auch ein zweiter Verteiler 3 gemäß Figuren 8 und 9 vorgesehen werden. Dieser weist ebenfalls einen Kanal 5 bzw. ein flaches Fließbett 5 mit einem vorteilhaften Rand auf, der/das sich im Wesentlichen etwa dreimal um die Achse 6 schneckenlinienartig windet. Vorzugsweise ist der Verteiler 3 vollständig aus Glas hergestellt, wobei in vorteilhafter Weise der Kanal 5 bzw. das Fließbett 5 ggf. einschließlich dessen Ränder 28 aufgeraut bzw. gestrahlt sind.

Die Steigung des flachen, im Querschnitt gemäß Figur 8c) (nahezu) horizontalen und ebenen Fließbettes längs des Sorptionsweges ist sehr klein, insbesondere so klein, dass die Solelösung gerade noch fließt. Zum Beispiel beträgt die Steigung bzw. das Verhältnis der Höhe des Fließbettes auf einer Oberseite 15 des Verteilers 3 zur Länge des Sorptionsweges auf der Oberseite 15 des Verteilers 3 etwa zwischen 0,5% und 5%, vorzugsweise etwa 7,5/500, d.h. ca. 1,5%. Hierdurch wird eine ausgesprochen kleine Kriechgeschwindigkeit des Sorbens bzw. der Solelösung längs des Sorptionsweges bzw. Fließbettes 5 realisiert, so dass eine lange Verweildauer auf dem Verteiler 3 verwirklicht ist. Dies verbessert die Sorption, so dass ein Umpumpen entbehrlich ist. D.h. die Solelösung muss nicht zweimal längs des Führungselementes 2 strömen bevor das Wasser abgetrennt wird. Beispielsweise ist ein Führungsstab 1 ca. 2 Meter hoch und weist mit Hilfe der vorteilhaften Verteiler 3 einen Sorptionsweg von ca. 12 Metern auf.

Im Zentrum des Verteilers 3 ist eine Ausnehmung vorgesehen, durch die ein Führungsstab 1, z.B. wenige Millimeter im Durchmesser, insb. 3 mm, gesteckt wird, so dass die Verteiler 3 sicher gehalten werden.

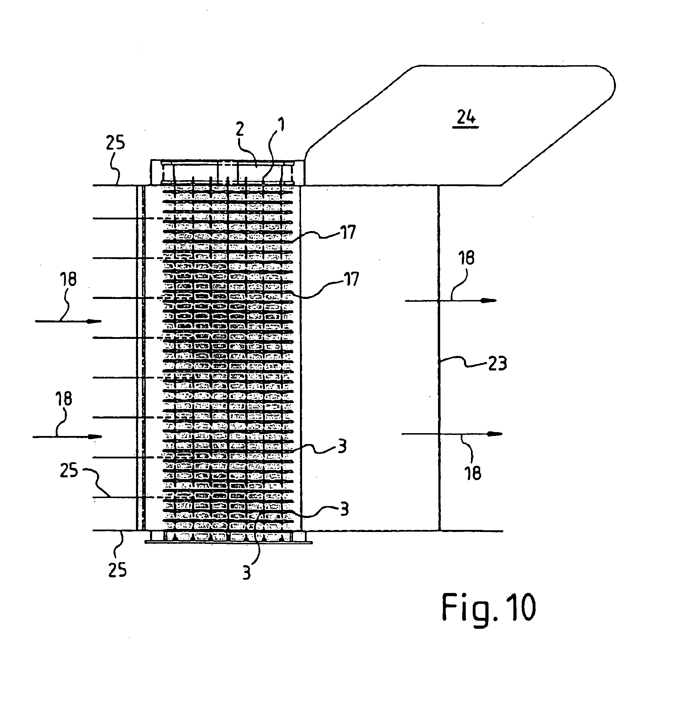

Der Verteiler gemäß den Figuren 8 (8a), 8b), 8c) sind nicht maßstabsgleich dargestellt) und 9 weist z.B. einen Durchmesser von ca. 10 bis 15 cm, vorzugsweise 12 cm, auf und ist in der Draufsicht bzw. im horizontalen Schnitt im Wesentlichen sechseckig, so dass durch aneinander fügen mehrerer Verteiler auf einer gemeinsamen, horizontalen Ebene eine nahezu geschlossene Fläche bzw. Ebene gebildet wird. Dies wird u.a. in Figur 10 deutlich. Hier sind beispielhaft mehrere Führungsstäbe 1 mit zahlreichen vertikal übereinander angeordneten Verteilern 3 verwendet, so dass die Verteiler eine nahezu geschlossene Ebene bzw. Schicht 17 innerhalb der Vorrichtung gemäß der Erfindung ausbilden. Hierdurch kann der Wind bzw. die Luft 18 aerodynamisch günstig entlang der Schicht 17 bzw. den Verteilern 3 strömen. Dies verhindert im Wesentlichen die Bildung von Todräumen bzw. Windschatten hinter den Verteilern 3, was sich sehr vorteilhaft für die Sorption auswirkt. Auch sind drei-, vier- oder achteckige Querschnitte der Verteiler 3 möglich, um eine weitgehend geschlossene Ebene bzw. Schicht 17 zu realisieren.

Die "Übergabe" des Sorbens bzw. der Solelösung von einer oberen Ebene/Schicht 17 in die nächst untere Schicht 17 bzw. Ebene erfolgt nicht wie beim ersten Ausführungsbeispiel durch Wechsel der Führungselemente 1, sondern erfolgt über eine Kante 19 von der Oberseite 15 zu einer Unterseite 16 des Verteilers 3. Das Fließbett 5 bzw. der Kanal 5 auf der Unterseite 16 des Verteilers 3 ist im Wesentlichen radial ausgerichtet und hat eher eine Sammlerfunktion des Sorbens, um dies an den Führungsstab 1 bzw. an das darunter angeordnete Verteilerelement 3 weiterzuleiten. Auch dieser Kanal 5 ist in vorteilhafter Weise aufgeraut. Zudem weist der Kanal 5 am äußeren Rand 28 einen relativ großen Durchmesser im Querschnitt auf (vgl. Figur 8c)), um ein Abtropfen bzw. Abdriften des Sorbens wirkungsvoll zu verhindern.

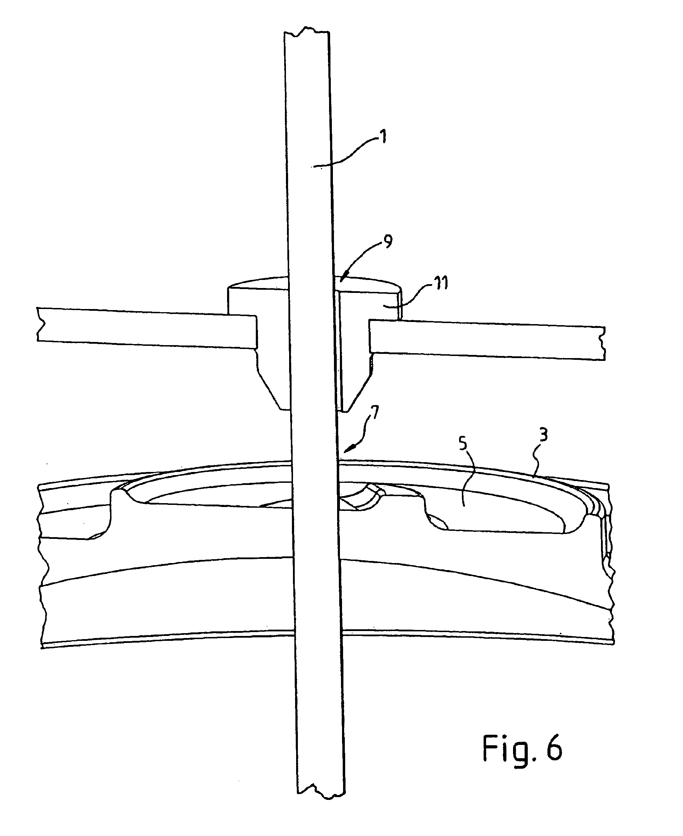

Eine Nase 20 auf der Unterseite 16 des Verteilers 3 gewährleistet ein vorteilhaftes Fließen des Sorbens zurück zum Führungsstab 1 bzw. entlang von diesem zum nächsten, darunter angeordneten Verteiler 3. Die Nase 20 entspricht funktional etwa dem Abfluss 10 des ersten Verteilers 3 gemäß den Figuren 1 bis 6, d.h. die Übergabe des Sorbens von einem Verteiler 3 an das nächste Element, d.h. Führungsstab 1 oder darunter angeordneter Verteiler 3 erfolgt hiermit.

Allgemein wird deutlich, dass die Oberseite 15 und die Unterseite 16 der (ersten oder zweiten) Verteiler 3 unterschiedlich ausgebildet sind, insbesondere in Funktion, Topographie, Strömungsverlauf bzw. Fließbett 5 etc.

Zudem ist ein Führungssteg 21 vorgesehen, der eine vorteilhafte Übergabe des Sorbens bzw. der Solelösung von der Oberseite 15 zur Unterseite 16 des Verteilers 3 gewährleistet.

Grundsätzlich wird deutlich, dass die Verteiler 3 gemäß den Figuren 8 und 9 im vertikalen Querschnitt in vorteilhafter Weise eine aerodynamische Form aufweisen, z.B. Scheibenform, Linsenform oder dergleichen, wobei am Randbereich der Verteiler "dünner" als im Zentrum bzw. in der Mitte ist. Dies ist einerseits aerodynamisch vorteilhaft und andererseits wird hiermit eine Steigung des Fließbettes, sowohl auf der Oberseite 15 als auch auf der Unterseite 16 realisiert, so dass die Schwerkraft das Sorbens bzw. die Solelösung "antreibt", d.h. zum (langsamen) Fließen bringt. Ein künstlicher Energieeinsatz ist hierdurch entbehrlich.

Wie in den Figuren deutlich wird, ist eine Breite 27 der Verteiler 3 größer als eine Höhe 26 der Verteiler 3 (z.B. Figur 8c)). Zum Beispiel beträgt das Verhältnis zwischen drei- bis zehnfache Breite zur Höhe, insbesondere ca. 5 zu 1 bzw. ca. 2 cm Höhe zu ca. 11 cm Breite 27.

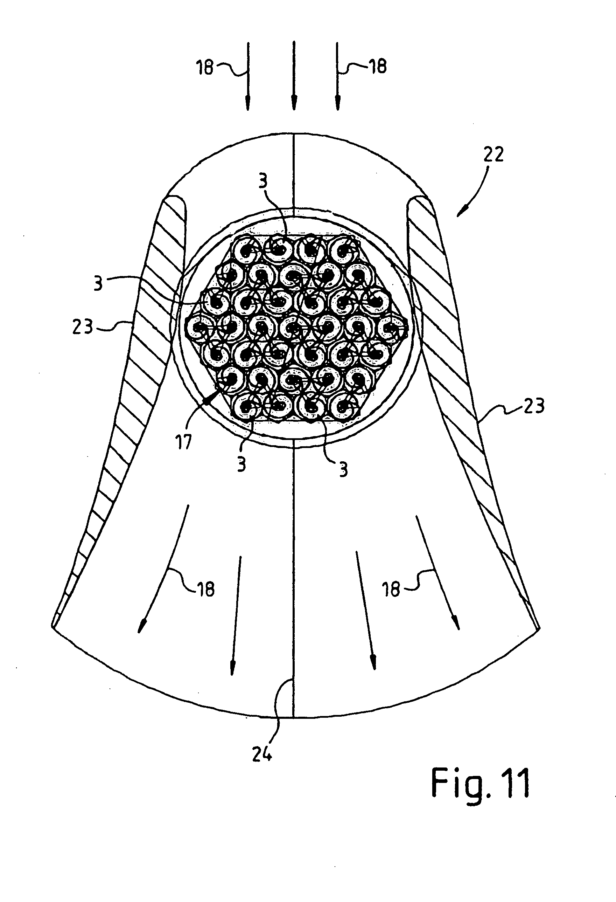

Die Vorrichtung gemäß den Figuren 10 und 11 weist in vorteilhafter Weise eine Unterdruckerzeugungseinheit, vorzugsweise eine Manteldüse 22 auf, womit im Bereich der Verteiler 3 bzw. Führungsstäbe 1 ein gewisser Unterdruck erzeugbar ist. Durch die vorteilhafte Weitung zweier Flügel 23 (in Strömungsrichtung der Luft 18 hinter den Verteilern 3 bzw. Führungsstäben 1) wird im Innern bzw. im Bereich der Verteiler 3 ein Unterdruck erzeugt, der die Luft 18 in vorteilhafter Weise zu den Verteilern 3 bzw. zum Sorbens zieht. Dies verbessert die Sorption gemäß der Erfindung u.a. indem ein Staudruck vor den Verteilern 3 wie z.B. noch beim Stand der Technik hervorgerufen, wirkungsvoll verringert bzw. verhindert wird. Auch werden hierdurch Todräume bzw. Windschatten hinter den Verteilern 3 reduziert bzw. beseitigt.

Eine vorteilhafte Windfahne 24 ermöglicht in Kombination mit einer Drehbarkeit bzw. Drehachse der Manteldüse 22 bzw. Flügel 23 ein selbstständiges Ausrichten der erfindungsgemäßen Vorrichtung in den Wind 18. Hierdurch wird ohne künstlichen Energieeinsatz eine automatische Ausrichtung der Anlage bzw. der Anströmung der Führungselemente 1 bzw. Verteiler 3 bzw. des Sorptionsweges 5 gewährleistet. Das führt dazu, dass die Vorrichtung gemäß der Erfindung windrichtungsunabhängig betrieben werden kann, insbesondere ohne Fremdenergieeinsatz zum Verdrehen der Vorrichtung bzw. der Führungsstäbe 1. So sind die Führungsstäbe 1 mit den Verteilern 3 auch vorzugsweise weitgehend symmetrisch um die Drehachse einer Windleiteinrichtung bzw. der Manteldüse 22 angeordnet, wie dies in der geschnittenen Draufsicht in Figur 11 deutlich wird. Durch die sechseckige Querschnittsform der einzelnen Verteiler 3 ergibt sich auch eine sechseckige Querschnittsform der jeweiligen Ebene bzw. Schicht 17, deren Zentrum bzw. Mitte in vorteilhafter Weise zugleich die Drehachse ist.

Weiterhin sind Sonnenblenden 25 bzw. Schattenspender 25 vorgesehen, die einfallendes Sonnenlicht abhalten bzw. verhindern, dass der Sorptionsweg bzw. die Verteiler 3 starker Sonneneinstrahlung ausgesetzt werden. Hiermit wird ein Verdampfen der Sorbens bzw. der Solelösung in vorteilhafter Weise verhindert bzw. minimiert.

Zudem richten die Sonnenblenden 25 einströmende Luft 18 in vorteilhafter Weise bereits etwas auf die Ebenen bzw. Schichten 17 der Verteiler 3 aus. Auch dies verbessert zusätzlich die Sorption. Gegebenenfalls können entsprechende Sonnenblenden in nicht näher dargestellter Weise auch (bezogen auf die Windrichtung) hinter den Verteilern 3 bzw. Führungsstäben 1 angeordnet werden, um auch von dieser Seite die Sonneneinstrahlung zu reduzieren bzw. abzuhalten und/oder das "Ausströmen" der (trockeneren) Luft 18 in vorteilhafter Weise zu beeinflussen bzw. zu lenken.

Generell können Vorrichtung wie diese im Wesentlichen dem Ausführungsbeispiel gemäß den Figuren 10 und 11 entsprechen in Form von Modulen sowohl horizontal und/oder vertikal miteinander kombiniert bzw. verschalten werden.

Grundsätzlich ist von Vorteil, eine Vorrichtung gemäß der Erfindung möglichst autark zu betreiben, sowohl bzgl. Energieversorgung als auch bzgl. der Trink-/Wasserherstellung aus atmosphärischer Luft. D.h. die Energie sollte möglichst aus erneuerbaren Quellen wie Wind, Sonne, Biomasse etc. kommen und die Wassererzeugung sollte möglichst störungs- oder wartungsarm und nahezu selbsttätig bzw. automatisiert erfolgen. Dies kann mit einer Vorrichtung gemäß der Erfindung in bislang nicht gekannter Weise verwirklicht werden. Somit ist ein Einsatz u.a. selbst in entlegenen, ariden Gebieten der Erde machbar, um beispielsweise dem in diesen Tagen von der UN beschlossenen Grundrecht auf sauberes Wasser Genüge zu tun.

## Patentansprüche

1. Vorrichtung zur Gewinnung von Wasser aus atmosphärischer Luft (18) mit einem fließfähigen Sorbens zur Sorption des Wassers, insbesondere einer Solelösung mit einem hygroskopischen Salz, wobei wenigstens entlang eines Sorptionsweges (1, 5) die Sorption vorgesehen ist, wobei das fließfähige Sorbens mindestens entlang des Sorptionsweges (1, 5) im Wesentlichen an einem Führungselement (1) zum Führen des Sorbens angeordnet ist, wobei das Führungselement (1) zumindest zwei, wenigstens teilweise vertikal übereinander angeordnete Verteilerelemente (3) zum Vergrößern der Sorptionsfläche bzw. des Sorptionsweges (5) aufweist, wobei eine als Projektion auf eine horizontale Ebene ausgebildete Breite (27) des Verteilerelements (3) größer als eine als Projektion auf eine vertikale Ebene ausgebildete Höhe (26) des Verteilerelements (3) ist, **dadurch gekennzeichnet, dass** ein Fließbett am Verteilerelement (3) als eine Lenkvorrichtung zum Lenken des fließfähigen Sorbens ausgebildet ist, so dass sich in horizontaler Richtung betrachtet im Wesentlichen der Sorptionsweg um eine Achse des Verteilerelements von wenigstens dem halben Kreisbogen erstreckt.

2. Vorrichtung nach Anspruch 1, **dadurch gekennzeichnet, dass** die Breite (27) des Verteilerelementes (3) wenigstens um den Faktor drei größer als die Höhe (26) des Verteilerelementes (3) ist.

3. Vorrichtung nach einem der vorgenannten Ansprüche, **dadurch gekennzeichnet, dass** eine in im Wesentlichen horizontal ausgerichtete Außenkontur des Verteilerelementes (3) vorgesehen ist, so dass zahlreiche Verteilerelemente (3) eine im Wesentlichen flächendeckende Anordnung (17) ausbilden.

4. Vorrichtung nach einem der vorgenannten Ansprüche, **dadurch gekennzeichnet, dass** eine vertikal ausgerichtete Höhe (26) des Verteilerelementes (3) an einem Randbereich des Verteilerelementes (3) kleiner als im Bereich des Führungselementes (1) und/oder im Bereich der Mitte (6) des Verteilerelementes (3) ist.

5. Vorrichtung nach einem der vorgenannten Ansprüche, **dadurch gekennzeichnet, dass** ein Fließbett (5) des Sorptionsweges (1, 5) auf einer Oberseite (15) des Verteilerelementes (3) einen Verlauf aufweist, der unterschiedlich zum Verlauf eines Fließbettes (5) des Sorptionsweges auf einer Unterseite (16) des Verteilerelementes (3) ist.

6. Vorrichtung nach einem der vorgenannten Ansprüche, **dadurch gekennzeichnet, dass** zumindest das Fließbett (5) des Sorptionsweges auf der Oberseite (15) des Verteilerelementes (3) einen Weg verlängernden Verlauf aufweist.

7. Vorrichtung nach einem der vorgenannten Ansprüche, **dadurch gekennzeichnet, dass** das Fließbett (5) des Sorptionsweges auf der Unterseite (16) des Verteilerelementes (3) einen im Wesentlichen in radialer Richtung ausgerichteten Verlauf aufweist.

8. Vorrichtung nach einem der vorgenannten Ansprüche, **dadurch gekennzeichnet, dass** wenigstens die Länge des Sorptionsweges (5) und/oder Fließbettes (5) auf der Oberseite (15) des Verteilerelementes (3) wenigstens um den Faktor zehn größer als die vertikal ausgerichtete Sorptionshöhe des Sorptionsweges (5) auf der Oberseite (15) des Verteilerelementes (3) ist.

9. Vorrichtung nach einem der vorgenannten Ansprüche, **dadurch gekennzeichnet, dass** wenigstens die Länge des Sorptionsweges (5) und/oder Fließbettes (5) auf der Oberseite (15) des Verteilerelementes (3) wenigstens um den Faktor fünfzig größer als die vertikal ausgerichtete Sorptionshöhe des Sorptionsweges (5) auf der Oberseite (15) des Verteilerelementes (3) ist.

10. Vorrichtung nach einem der vorgenannten Ansprüche, **dadurch gekennzeichnet, dass** sich wenigstens ein Fließbett (5) des Sorptionsweges (1, 5) um eine Achse (6) des Führungselementes (1) von wenigstens 180°erstreckt.

11. Vorrichtung nach einem der vorgenannten Ansprüche, **dadurch gekennzeichnet, dass** das Fließbett (5) als flaches Fließbett (5) des Verteilerelementes (3) mit einem im Wesentlichen vertikal ausgerichteten Rand (28) ausgebildet ist.

12. Vorrichtung nach einem der vorgenannten Ansprüche, **dadurch gekennzeichnet, dass** das Führungselement (1) und/oder das Verteilerelement (3) wenigstens eine im Wesentlichen aus Glas bestehende Kontaktfläche für das fließfähige Sorbens aufweist, wobei wenigstens die Kontaktfläche des Glases als aufgeraute Oberfläche ausgebildet ist.

13. Vorrichtung nach einem der vorgenannten Ansprüche, **dadurch gekennzeichnet, dass** das Führungselement (1) wenigstens eine zumindest eine Kapillare (9) umfassende Kapillareinheit (11) zum Zudosieren des fließfähigen Sorbens zum Sorptionsweg (1, 5) aufweist.

## Claims

1. A device for the extraction of water from atmospheric air (18) having a flowable sorbent for the sorption of the water, in particular brine solution with a hygroscopic salt, wherein at least along a sorption path (1, 5) the sorption is provided, wherein the flowable sorbent is arranged at least along the sorption path (1, 5) substantially on a guide element (1) for guiding the sorbent, wherein the guide element (1) has at least two distributor elements (3) arranged at least in part vertically on top of each other for the enlargement of the sorption surface or the sorption path (5), wherein a width (27) of the distributor element (3) designed as a projection onto a horizontal plane is larger than a height (26) of the distributor element (3) designed as a projection onto a vertical plane, **characterized in that** a flow bed on the distributor element (3) is designed as a steering device for steering the flowable sorbent, so that viewed in the horizontal direction the sorption path extends substantially about an axis of the distributor element by at least a half circular arc.

2. A device according to claim 1, **characterized in that** the width (27) of the distributor element (3) is at least larger than the height (26) of the distributor element (3) by a factor of three.

3. A device according to one of the aforementioned claims, **characterized in that** an outer contour of the essentially horizontally oriented distributor element (3) is provided, so that numerous distributor elements (3) form an essentially extensive arrangement (17).

4. A device according to one of the aforementioned claims, **characterized in that** a vertically oriented height (26) of the distributor element (3) on an edge region of the distributor element (3) is smaller than in the region of the guide element (1) and/or in the region of the center (6) of the distributor element (3).

5. A device according to one of the aforementioned claims, **characterized in that** the flow bed (5) of the sorption path (1, 5) has a course on an upper side (15) of the distributor element (3), which is different from the course of the flow bed (5) of the sorption path on a lower side (16) of the distributor element (3).

6. A device according to one of the aforementioned claims, **characterized In that** at least the flow bed (5) of the sorption path has a path-extending course on the upper side (15) of the distributor element (3).

7. A device according to one of the aforementioned claims, **characterized in that** the flow bed (5) of the sorption path has a course essentially oriented in the radial direction on the lower side (16) of the distributor element (3).

8. A device according to one of the aforementioned claims, **characterized in that** at least the length of the sorption path (5) and/or flow bed (5) on the upper side (15) of the distributor element (3) is larger at least by a factor of ten than the vertically oriented sorption height of the sorption path (5) on the upper side (15) of the distributor element (3).

9. A device according to one of the aforementioned claims, **characterized in that** at least the length of the sorption path (5) and/or flow bed (5) on the upper side (15) of the distributor element (3) is larger at least by a factor of fifty than the vertically oriented sorption height of the sorption path (5) on the upper side (15) of the distributor element (3).

10. A device according to one of the aforementioned claims **characterized in that** at least a flow bed (5) of the sorption path (1, 5) extends about an axis (6) of the guide element (1) by at least 180°.

11. A device according to one of the aforementioned claims, **characterized in that** the flow bed (5) is designed as a shallow flow bed (5) of the distributor element (3) having an essentially vertically oriented edge (28).

12. A device according to one of the aforementioned claims, **characterized in that** the guide element (1) and/or the distributor element (3) has a contact surface consisting essentially of glass for the flowable sorbent, wherein at least the contact surface is designed as a roughened surface.

13. A device according to one of the aforementioned claims, **characterized in that** the guide element (1) has at least one capillary unit (11) comprising at least one capillary (9) for adding the flowable sorbent to the sorption path (1, 5).

## Revendications

1. Dispositif pour la production d'eau à partir d'air atmosphérique (18) comprenant un sorbant fluide pour la sorption de l'eau, en particulier une solution de saumure avec un sel hygroscopique, étant entendu que la sorption est prévue au moins le long d'un trajet de sorption (1, 5), étant entendu que le sorbant fluide est agencé au moins le long du trajet de sorption (1, 5) essentiellement dans un élément de guidage (1) destiné à guider le sorbant, étant entendu que l'élément de guidage (1) présente au moins deux éléments de répartition (3) agencés au moins partiellement l'un par-dessus l'autre verticalement destinés à agrandir la surface de sorption ou le trajet de sorption (5), étant entendu qu'une largeur (27) de l'élément de répartition (3) réalisée en tant que projection sur un plan horizontal est plus grande qu'une hauteur (26) de l'élément de répartition (3) réalisée en tant que projection sur un plan vertical, **caractérisé en ce qu'**un lit fluidisé est réalisé sur l'élément de répartition (3) comme un dispositif de déviation destiné à dévier le sorbant fluide de telle sorte que le trajet de sorption, considéré dans la direction horizontale, s'étend essentiellement autour d'un axe de l'élément de répartition d'au moins la moitié d'un arc de cercle.

2. Dispositif selon la revendication 1, **caractérisé en ce que** la largeur (27) de l'élément de répartition (3) est plus grande que la hauteur (26) de l'élément de répartition (3) au moins d'un facteur de trois.

3. Dispositif selon l'une des revendications précédentes, **caractérisé en ce qu'**il est prévu un dispositif dans le contour orienté essentiellement horizontalement de l'élément de répartition (3) de telle sorte qu'une pluralité d'éléments de répartition (3) forment un agencement (17) couvrant essentiellement toute la surface.

4. Dispositif selon l'une des revendications précédentes, **caractérisé en ce qu'**une hauteur (26) orientée verticalement de l'élément de répartition (3) est plus petite dans une zone de bord de l'élément de répartition (3) que dans la zone de l'élément de guidage (1) et/ou dans la zone du centre (6) de l'élément de répartition (3).

5. Dispositif selon l'une des revendications précédentes, **caractérisé en ce qu'**un lit fluidisé (5) du trajet de sorption (1, 5) présente, sur un côté supérieur (15) de l'élément de répartition (3), un tracé qui est différent du tracé d'un lit fluidisé (5) du trajet de surption sur un côté inférieur (16) de l'élément de répartition (3).

6. Dispositif selon l'une des revendications précédentes, **caractérisé en ce qu'**au moins le lit fluidisé (5) du trajet de sorption présente, sur le côté supérieur (15) de l'élément de répartition (3), un tracé allongeant le trajet.

7. Dispositif selon l'une des revendications précédentes, **caractérisé en ce que** le lit fluldisé (5) du trajet de sorption présente, sur le côté inférieur (16) de l'élément de répartition (3), un tracé orienté essentiellement dans la direction radiale.

8. Dispositif selon l'une des revendications précédentes, **caractérisé en ce qu'**au moins la longueur du trajet de sorption (5) et/ou du lit fluidisé (5) sur le côté supérieur (15) de l'élément de répartition (3) est plus grande que la hauteur de sorption orientée verticalement du trajet de sorption (5) sur le côté supérieur (15) de l'élément de répartition (3) au moins d'un facteur de dix.

9. Dispositif selon l'une des revendications précédentes, **caractérisé en ce qu'**au moins la longueur du trajet de sorption (5) et/ou du lit fluidisé (5) sur le côté supérieur (15) de l'élément de répartition (3) est plus grande que la hauteur de sorption orientée verticalement du trajet de sorption (5) sur le côté supérieur (15) de l'élément de répartition (3) au moins d'un facteur de cinquante.

10. Dispositif selon l'une des revendications précédentes, **caractérisé en ce qu'**au moins un lit fluidisé (5) du trajet de sorption (1, 5) s'étend autour d'un axe (6) de l'élément de guidage (1) d'au moins 180°.

11. Dispositif selon l'une des revendications précédentes, **caractérisé en ce que** le lit fluidisé (5) est réalisé en tant que lit fluidisé plat (5) de l'élément de répartition (3) avec un bord (28) orienté essentiellement verticalement.

12. Dispositif selon l'une des revendications précédentes, **caractérisé en ce que** l'élément de guidage (1) et/ou l'élément de répartition (3) présentent au moins une surface de contact constituée essentiellement de verre pour le sorbant fluide, étant entendu qu'au moins la surface de contact du verre est réalisée en tant que surface dépolie.

13. Dispositif selon l'une des revendications précédentes, **caractérisé en ce que** l'élément de guidage (1) présente au moins une unité capillaire (11) comprenant au moins un capillaire (9) aux fins de l'addition dosée du sorbant fluide dans le trajet de sorption (1, 5).
